# FASCICULE DE BREVET EUROPEEN

(11) **EP 1 632 076 B1**
(45) Date de publication et mention de la délivrance du brevet: **15.11.2006**
(21) Numéro de dépôt: 04767194.6
(22) Date de dépôt: 27.05.2004
(51) Int. Cl.: H04L 29/06

(54) **PROCEDE DE TRAITEMENT D'ENSEMBLES DE DONNEES DE DESCRIPTION DE CONTENUS MULTIMEDIA, ET DISPOSITIF CORRESPONDANT**
VERFAHREN ZUM VERARBEITEN VON DATENSÄTZEN MIT BESCHREIBUNGEN MULTIMEDIALER INHALTE, ANWENDUNG DES VERFAHRENS UND ENTSPRECHENDES COMPUTERPROGRAMM
METHOD FOR PROCESSING MULTIMEDIA CONTENT DESCRIPTION DATA SETS, USE OF SAID METHOD AND CORRESPONDING COMPUTER PROGRAMME

(30) Priorité: 30.05.2003 FR 0306583
(43) Date de publication de la demande: 08.03.2006
(73) Titulaire: FRANCE TELECOM, 75015 Paris (FR)
(72) Inventeur: AMONOU, Isabelle, F-35235 Thorigne Fouillard (FR); BERTIN, Christian, F-35000 Rennes (FR)
(74) Mandataire: Remy, Vincent Noel Paul
(86) Numéro de dépôt international: PCT/FR2004/001317
(87) Numéro de publication internationale: WO 2004/110015

(56) Documents cités:
- US-A1- 2002 126 698
- US-B1- 6 337 881
- WEI ZHAO ET AL: "Efficient adaptive media scaling and streaming of layered multimedia in heterogeneous environment" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, 7 juin 1999 (1999-06-07), pages 377-381, XP010519418 ISBN: 0-7695-0253-9
- CHOW R K Y ET AL: "Scalable video delivery to unicast handheld-based clients" IEEE JOURNAL, 5 septembre 2000 (2000-09-05), pages 93-98, XP010514085

## Description

La présente invention concerne un procédé de traitement d'ensembles de données de description de contenus multimédia, pour la fourniture d'une pluralité d'ensembles de sortie à partir d'un unique ensemble d'entrée. L'invention concerne également l'utilisation d'un tel procédé.

On connaît des procédés de génération d'ensembles de données de description de contenus multimédia, notamment selon le standard DVB (de l'anglais "Digital Video Broadcast"). Une fois générés, ces ensembles sont destinés à être transmis à des moyens de stockage distants sous forme de fichiers, ou bien tout simplement à être diffusés avec les contenus multimédia auxquels ils sont associés. Cependant, la taille de ces ensembles de données ne peut pas être modifiée une fois que ceux-ci sont générés, notamment pour répondre à des contraintes du réseau de diffusion, ou des contraintes des moyens de stockage distants. Autrement dit, une fois que l'ensemble de données de description est généré par l'opérateur de service ou de réseau, il est transmis à destination des récepteurs sans pouvoir être modifié dynamiquement. Un tel système est décrit dans l'article "Efficient Adaptive Media Scaling and Streaming of Layered Multimedia in Heterogenous Environment" publié par IEEE en juin 1999.

Sur un réseau de diffusion DVB, dans le cadre d'un transfert de données MPEG2, le débit instantané disponible est élevé et constant, ce qui permet de transmettre aisément ces ensembles de données de description. Par contre, sur un réseau de type Internet, pour lequel la qualité de service est variable, la transmission de ces ensembles de données peut poser des problèmes, lorsqu'ils sont trop volumineux. En conclusions, ce qui ne pose pas de problème en diffusion classique devient problématique dans le contexte d'Internet.

L'invention vise à remédier à cet inconvénient en fournissant un procédé de traitement d'ensembles de données de description permettant de prendre en compte des contraintes du réseau de diffusion ou des moyens de stockage destinataires des ensembles de données, lors de la génération de ces ensembles de données.

L'invention a donc pour objet un procédé de traitement d'ensembles de données de description de contenus multimédia pour la fourniture d'une pluralité d'ensembles de sortie à partir d'un unique ensemble d'entrée, caractérisé en ce qu'il comporte les étapes suivantes :
- on affecte des coefficients de priorité à au moins une partie des données de description de l'ensemble d'entrée ;
- on associe à un nombre prédéterminé d'ensembles de sortie, des seuils de coefficients de priorité ; et
- on répartit les données dans les ensembles de sortie en fonction des coefficients de priorité affectés aux éléments de l'ensemble d'entrée et des seuils associés à chacun des ensembles de sortie.

Ainsi, en fonction des coefficients de priorité affectés à chacune des données de description, celles-ci sont réparties dans des ensembles de sortie différents associés à des priorités différentes. Ceci permet de choisir quel ensemble de sortie sera transmis à un destinataire, en fonction des contraintes du réseau pour parvenir à ce destinataire ou en fonction des capacités de stockage du destinataire.

Un procédé de traitement d'ensembles de données selon l'invention peut en outre comporter les caractéristiques suivantes :
- on affecte un coefficient de priorité spécifique prédéterminé aux données de description devant être contenues dans tous les ensembles de sortie ;
- chaque donnée de description à laquelle est affectée un coefficient de priorité autre que ledit coefficient de priorité spécifique est contenue dans un unique ensemble de sortie déterminé en fonction des seuils associés aux ensembles de sortie ;
- chaque donnée de description à laquelle est affectée un coefficient de priorité autre que ledit coefficient de priorité spécifique est contenue dans un ou plusieurs ensembles de sortie déterminés en fonction des seuils associés aux ensembles de sortie, de sorte que toutes les données d'un ensemble de sortie quelconque sont contenues dans tout autre ensemble de sortie comportant des données moins prioritaires que celles dudit ensemble de sortie quelconque ;
- le procédé comporte en outre une étape de transmission d'au moins l'un des ensembles de sortie vers un destinataire en fonction des capacités de moyens de transmission des données de description vers le destinataire ;
- le procédé comporte en outre une étape de transmission d'au moins l'un des ensembles de sortie vers un destinataire en fonction des capacités de moyens de stockage du destinataire ;
- le procédé comporte en outre une étape de transmission d'au moins l'un des ensembles de sortie vers un destinataire en fonction d'un niveau de souscription de l'usager à un service prédéterminé ;
- le procédé comporte en outre une étape de transmission d'au moins l'un des ensembles de sortie vers un destinataire en fonction d'un paiement effectué préalablement pour l'accès à cet ensemble de sortie.

L'invention a également pour objet l'utilisation d'un procédé de traitement d'ensembles de données de description tel que défini précédemment, pour le traitement d'un fichier de données XML.

Enfin, l'invention a également pour objet un programme d'ordinateur adapté pour le traitement d'ensembles de données de description de contenus multimédia, pour la fourniture d'une pluralité d'ensembles de sortie à partir d'un unique ensemble d'entrée, caractérisé en ce qu'il comporte :
- des moyens de lecture d'un ensemble de coefficients de priorité affectés à au moins une partie des données de description de l'ensemble d'entrée ;
- des moyens de lecture d'un ensemble de seuils de coefficients de priorité associés à un nombre prédéterminé d'ensembles de sortie ; et
- des moyens de répartition des données dans les ensembles de sortie en fonction des coefficients de priorité affectés aux éléments de l'ensemble d'entrée et des seuils associés à chacun des ensembles de sortie.

L'invention sera mieux comprise à l'aide de la description qui va suivre, donnée uniquement à titre d'exemple et faite en se référant aux dessins annexés dans lesquels :
- la figure 1 représente schématiquement la structure d'un système de mise en oeuvre d'un procédé de traitement d'ensembles de données selon l'invention ;
- la figure 2 représente les étapes successives d'un procédé selon l'invention ;
- la figure 3 illustre symboliquement des fichiers de sortie fournis par un procédé selon un premier mode de réalisation de l'invention ;
- la figure 4 illustre symboliquement des fichiers de sortie fournis par un procédé selon un second mode de réalisation de l'invention ;
- la figure 5 représente schématiquement la structure générale d'un premier système permettant l'utilisation d'un procédé selon l'invention ; et
- la figure 6 représente schématiquement la structure générale d'un second système permettant l'utilisation d'un procédé selon l'invention.

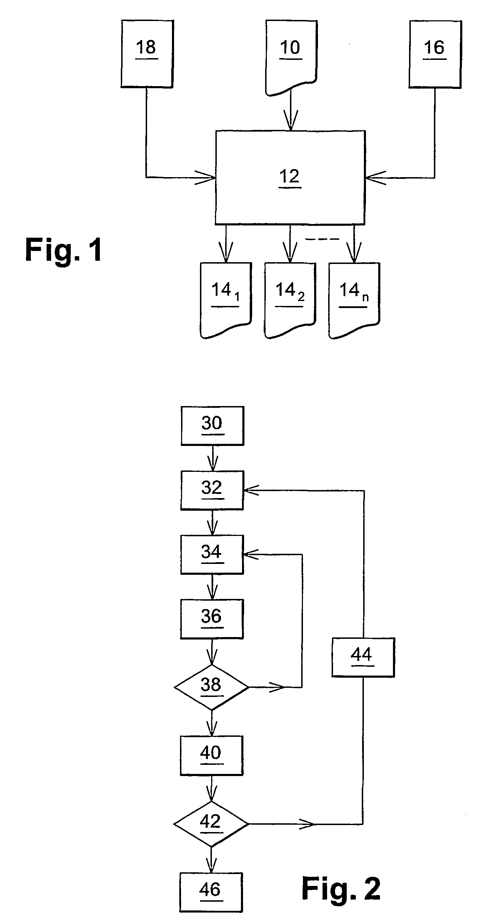

Le système représenté sur la figure 1 comporte un ensemble 10 de données XML (de l'Anglais « eXtended Markup Language ») d'entrée destiné à être traité par un filtre 12, pour la fourniture en sortie du filtre d'une pluralité d'ensembles de sortie 14₁, 14₂, ..., 14ₙ, chacun de ces ensembles de sortie comportant une partie des données XML contenues dans l'ensemble 10.

On notera que les données XML ne constituent qu'un exemple de données de description et que l'invention peut également s'appliquer à des données de description conformes à un autre standard.

Le filtre 12 est par exemple un programme exécutable stocké par un micro-ordinateur (non représenté).

Le filtre 12 est adapté pour recevoir en entrée un fichier 16 de coefficients de priorité associés à chacune des données de description de l'ensemble 10 de données XML. Chaque donnée XML est soit un élément délimité par une balise ouvrante et une balise fermante de même nom dans l'ensemble de données XML 10, soit un attribut rattaché à un élément. Le fichier 16 associe alors à chaque donnée XML un coefficient de priorité.

Le filtre 12 est également adapté pour recevoir en entrée un fichier 18 comportant des seuils de coefficients de priorité, ces seuils étant associés respectivement aux ensembles 14₁, 14₂, ..., 14ₙ.

Dans un mode de réalisation préféré, on affecte aux données des coefficients de priorité d'autant plus élevés que les données associées à ces coefficients sont de priorité faible. Ainsi, on affecte un coefficient de priorité égal à zéro, pour les données de description les plus importantes, c'est-à-dire celles qui doivent être contenues dans tous les ensembles de sortie 14₁, 14₂, ..., 14ₙ. On affecte ensuite des coefficients strictement positifs aux autres données, déterminés en fonction de leur importance. Enfin, en ce qui concerne les données de description les moins importantes, on peut ne pas leur affecter de coefficient de priorité, si l'on considère que l'absence de coefficient correspond à un coefficient infini.

Dans un mode préféré de réalisation, le fichier 18 de seuils de coefficients de priorité comporte n valeurs de seuils N₁,..., Nₙ.

Le filtre 12 est alors configuré pour :
- recopier dans l'ensemble 14₁ les données associées au coefficient de priorité nul et les données associées aux coefficients de priorité inférieurs ou égaux à N₁ ;
- recopier dans l'ensemble 14₂ les données associées au coefficient de priorité nul et les données associées aux coefficients de priorité strictement supérieurs à N₁ et inférieurs ou égaux à N₂ ;
- recopier dans l'ensemble 14ₙ les données associées au coefficient de priorité nul et les données associées aux coefficients de priorité strictement supérieurs à Nₙ₋₁ et inférieurs ou égaux à Nₙ.

En variante, le filtre 12 peut aussi être configuré pour recopier dans un ensemble supplémentaire 14ₙ₊₁ les données associées au coefficient de priorité nul et les données associées aux coefficients de priorité strictement supérieurs à Nₙ, notamment les données qui ne sont associées à aucun coefficient de priorité.

Il en résulte que les ensembles fournis en sortie 14₁, 14₂, ..., 14ₙ (et éventuellement 14ₙ₊₁) ont la propriété d'être complémentaires, c'est-à-dire que les données de description qu'ils contiennent sont distinctes, à l'exception des données de description associées au coefficient de priorité nul.

Les ensembles de sortie 14₁, 14₂, ..., 14ₙ sont ensuite destinés à être transmis à travers un réseau de transmission de données ou à être stockés dans des moyens de stockage d'un ou plusieurs destinataires.

Dans le cas d'une application à des données de description de contenus audiovisuels, l'ensemble de sortie 14₁ comporte les données les plus importantes, par exemple le titre ou la durée d'un film, alors que les autres ensembles 14₂, ..., 14ₙ (et éventuellement 14ₙ₊₁) comportent des données de moins en moins importantes, telles que par exemple les acteurs ou la date de réalisation d'un film.

Pour illustrer plus précisément le système qui vient d'être décrit, l'ensemble de données d'entrée est par exemple une table XML telle que la table suivante, inspirée des spécifications du forum TV-Anytime :

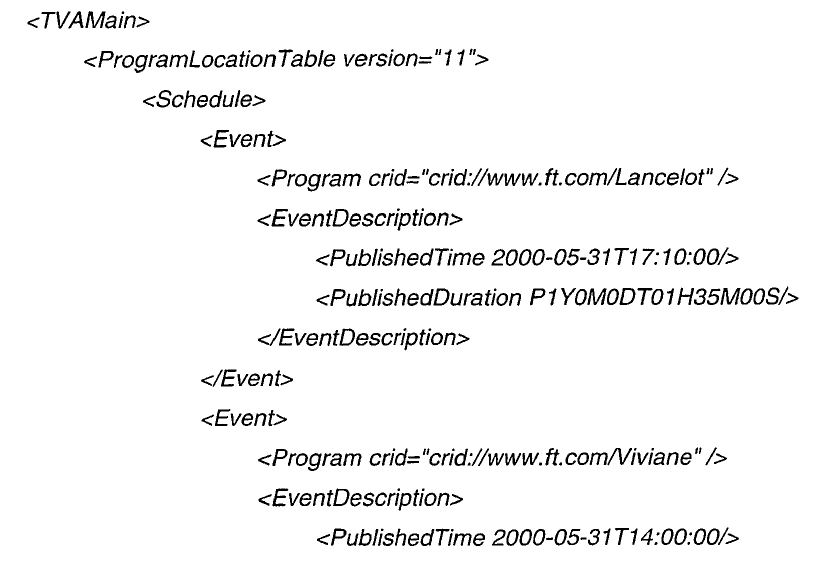

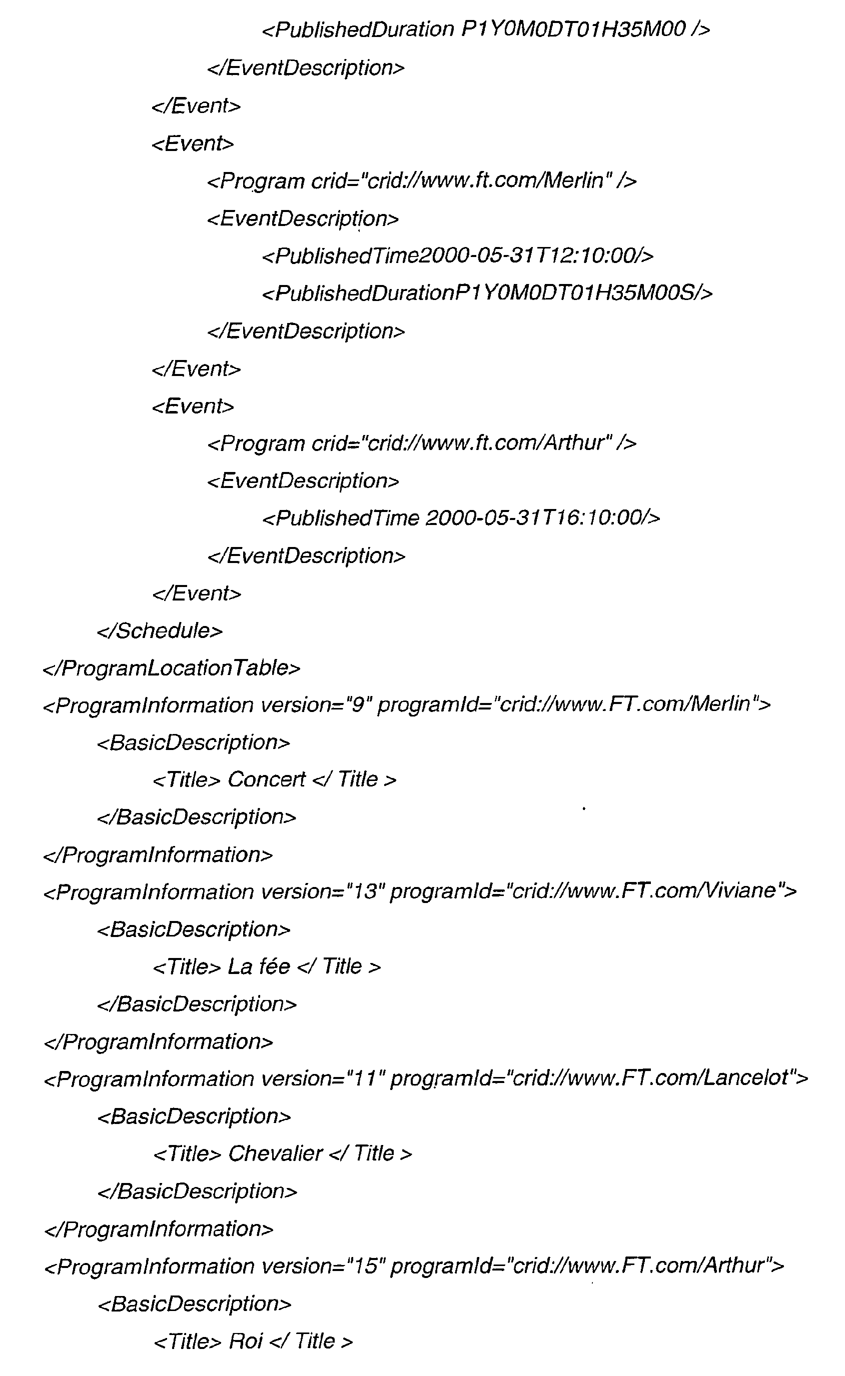

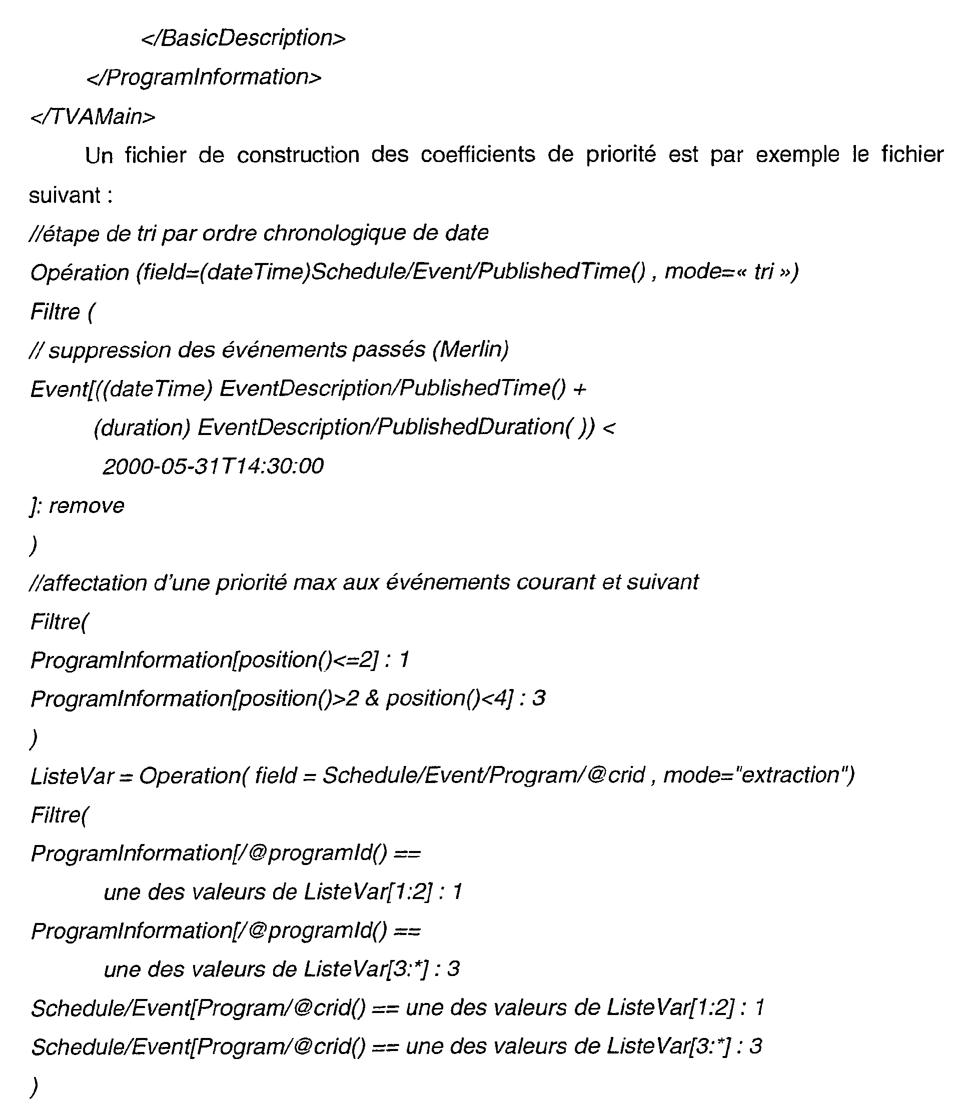

On notera que ce fichier comporte des instructions pour affecter des coefficients de priorité à chacune des données du fichier d'entrée 10, et également des instructions visant à trier les données XML de la table d'entrée, ou à en supprimer certaines.

Les données de la table d'entrée peuvent avoir des relations d'héritage entre elles, de sorte qu'une donnée parent (par exemple la donnée TVAMain) ayant au moins un descendant peut hériter du coefficient de priorité de ce descendant.

Il permet la génération du fichier 16 de coefficients de priorité suivant (présenté sous forme d'un tableau) :

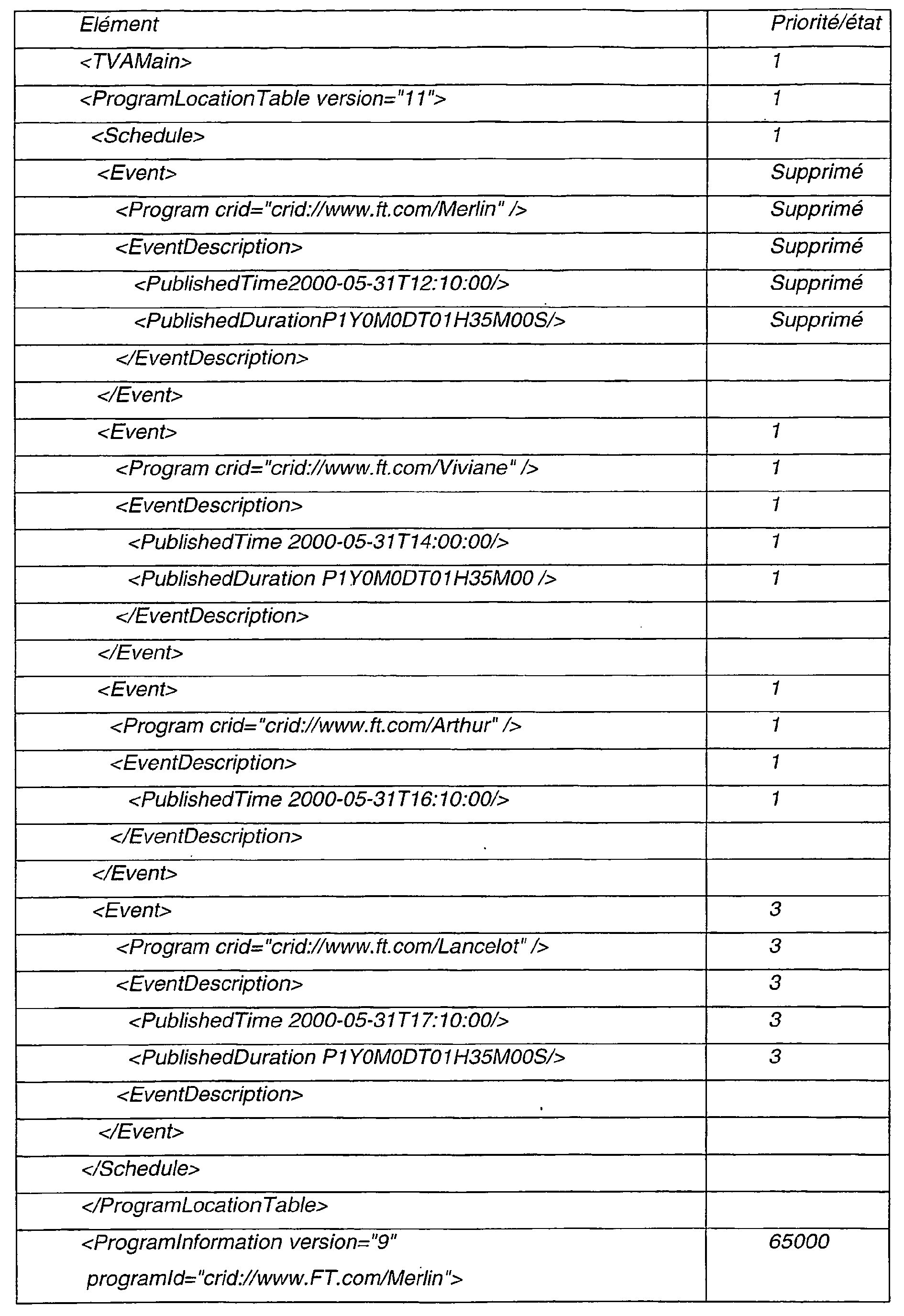

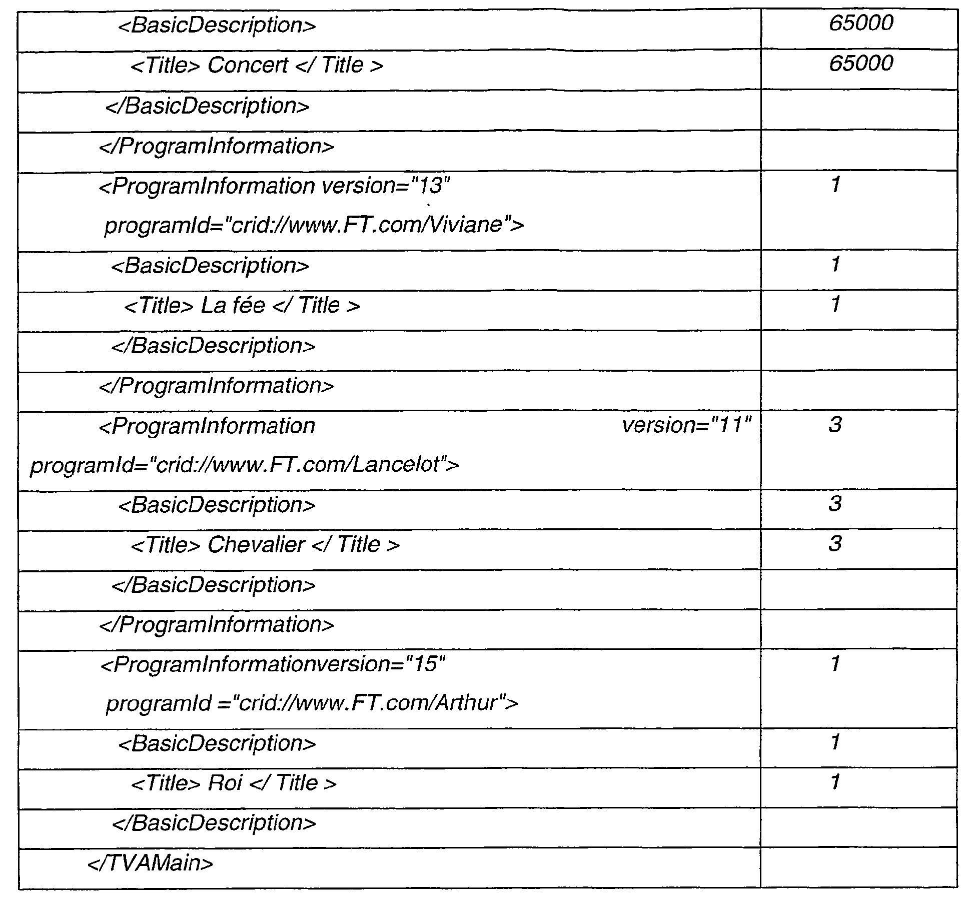

Le fichier 18 de seuils est par exemple le fichier suivant :
*Niveau N1 = 2*
*Niveau N2 = 4*
*Niveau N3 = 65000*
où le nombre 65000 représente l'infini.

L'application du filtre 12 à la table XML précédente avec les fichiers 16 et 18 donnés en exemple donne deux tables XML de sortie 14₁ et 14₂.

La première table XML 14₁ comporte les données suivantes :

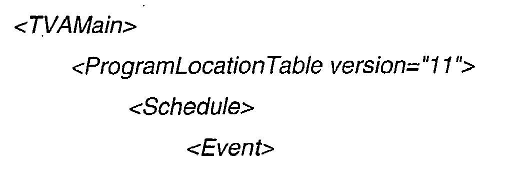

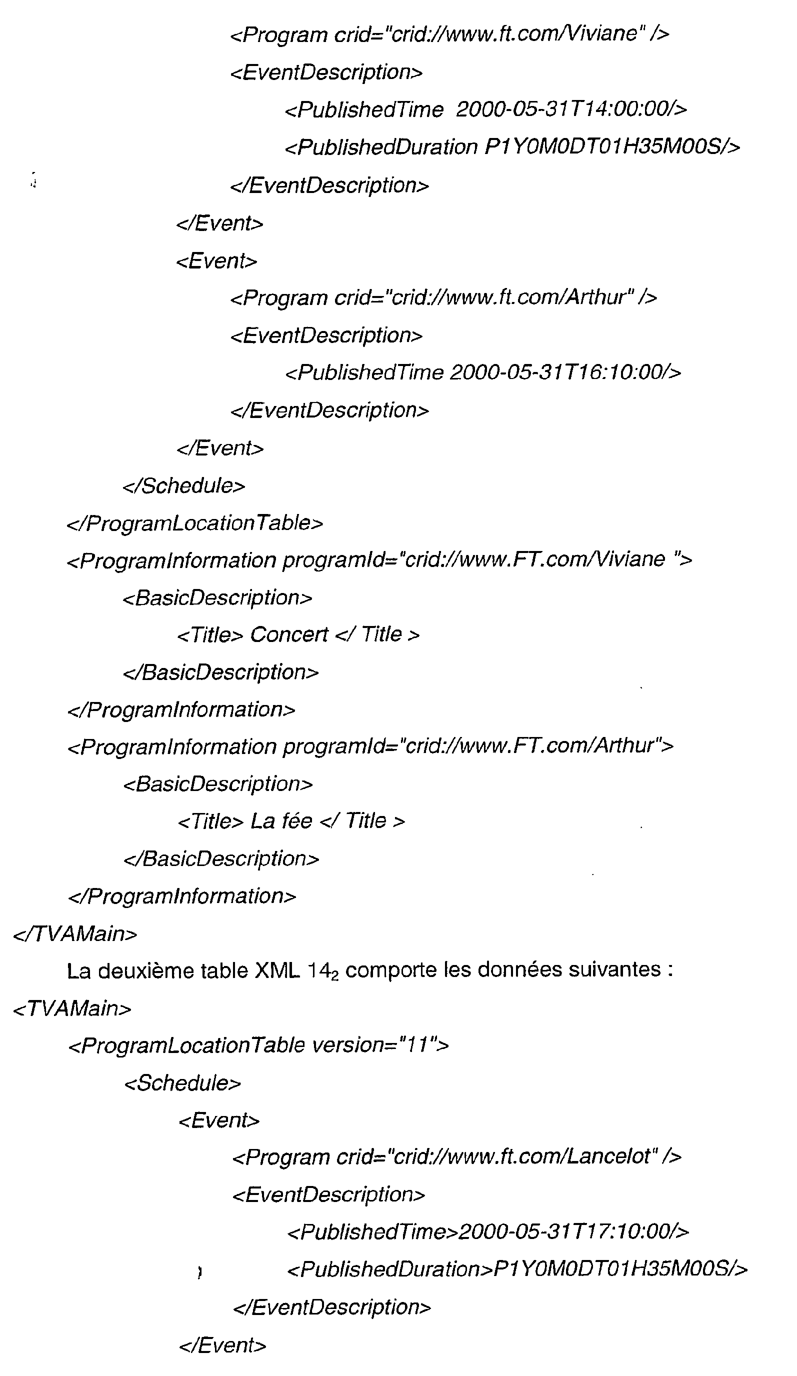

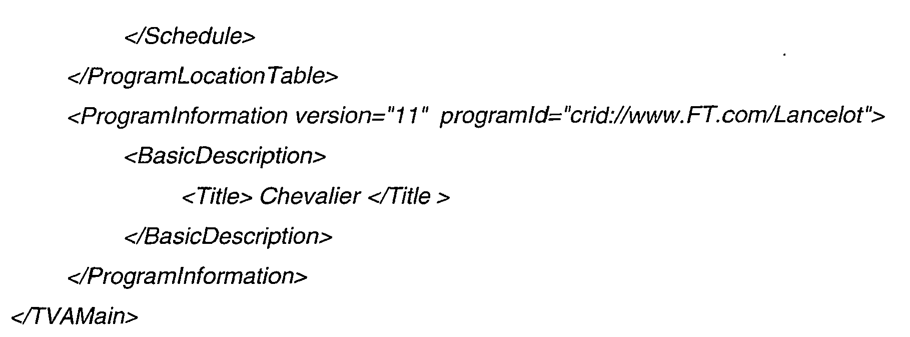

La figure 2 représente les étapes successives du procédé de traitement mis en oeuvre par le filtre 12.

Ce procédé comporte une première étape 30 d'initialisation et de lecture des données fournies en entrée du filtre 12, notamment de lecture des fichiers 16 et 18. Lors de cette étape, un indice i est initialisé à 1, une borne inférieure Binf est initialisée à zéro et une borne supérieure Bsup est initialisée à Nᵢ = N₁.

Lors de l'étape 32 suivante, on crée un fichier fᵢ, correspondant au i-ème ensemble de sortie 14ᵢ.

Ensuite, lors d'une étape 34 de lecture de l'ensemble 10 de données d'entrée, le filtre 12 cherche puis lit une donnée XML de l'ensemble d'entrée 10 associée à un coefficient de priorité strictement supérieur à Binf et inférieur ou égal Bsup, ou égal à zéro.

Lors de l'étape 36 suivante, le filtre 12 accède à la balise correspondant à cette donnée XML et insère la donnée XML dans le fichier de sortie fᵢ.

Lors de l'étape de test 38 suivante, le filtre 12 vérifie s'il a lu la dernière donnée XML de l'ensemble d'entrée 10. Si ce n'est pas le cas, on revient à l'étape 34, pour poursuivre la lecture des données XML dans l'ensemble 10 de données d'entrée.

Si la dernière donnée XML a été lue, on passe à une étape 40 de validation et de sauvegarde du fichier de sortie fᵢ.

Ensuite, lors d'une étape de test 42, on vérifie si le fichier de sortie généré fᵢ est le dernier fichier de sortie devant être généré.

Si ce n'est pas le cas, on passe à une étape 44 d'incrémentation. Lors de cette étape 44, l'indice i est incrémenté d'une unité, puis l'on affecte à Binf la valeur Nᵢ₋₁, et à Bsup la valeur Nᵢ. On passe ensuite de nouveau à l'étape 32 pour la création d'un nouveau fichier fᵢ.

Sinon, c'est-à-dire si lors de l'étape de test 42 on constate qu'on a généré le dernier fichier de sortie 14ₙ, on passe à une étape 46 de fin de procédé.

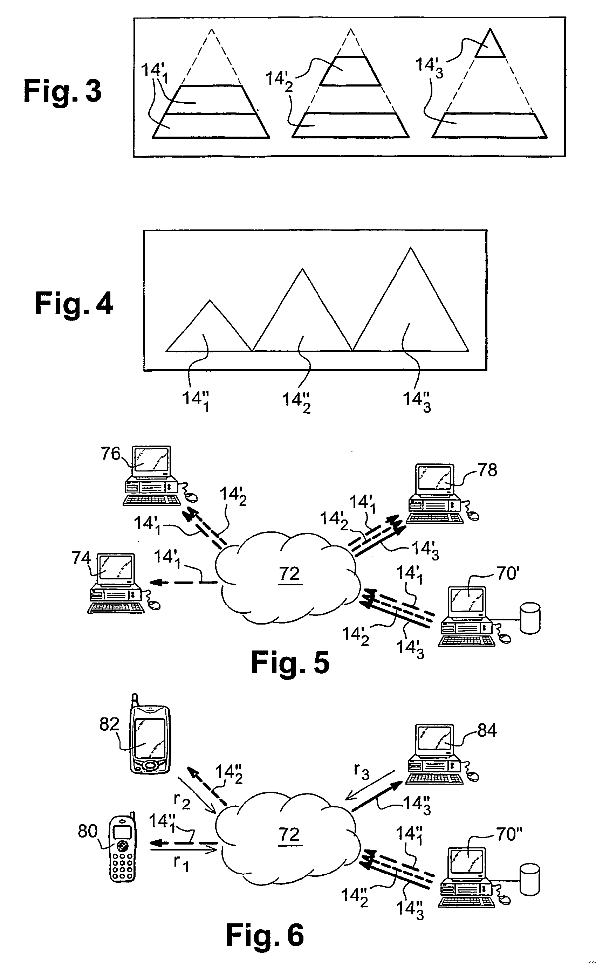

La figure 3 représente la complémentarité des ensembles de sortie fournis par le procédé de traitement de données de description, conformément au mode de réalisation décrit précédemment. Seuls trois ensembles de sortie sont représentés et sont notés 14'₁, 14'₂ et 14'₃. Dans ce cas, lorsque des données de description sont contenues dans l'un des ensembles de sortie, elles ne sont pas présentes dans les autres ensembles, à l'exception des données de priorité associées au coefficient nul. Ainsi, en fonction des capacités du réseau, ou en fonction des capacités de stockage du destinataire, on transmet l'un uniquement, deux, ou bien trois des ensembles de sortie générés par le filtre 12.

En variante, la figure 4 représente les ensembles de sortie fournis par le procédé de traitement de données de description, conformément à un autre mode de réalisation. Seuls trois ensembles de sortie sont représentés et sont notés 14"₁, 14"₂ et 14"₃ pour les distinguer de ceux fournis par le mode de réalisation précédent. Dans ce cas, l'ensemble 14"₁ comporte toutes les données associées aux coefficients de priorité inférieurs N₁. L'ensemble 14"₂ contient toutes les données de description associées aux coefficients de priorité inférieurs à N₂ et l'ensemble 14"₃ comprend toutes les données de description associées aux coefficients de priorité inférieurs N₃. Par conséquent, l'ensemble 14"₃ contient toutes les données de description de l'ensemble 14"₂, qui lui-même contient toutes les données de description de l'ensemble 14"₁.

Ainsi, dans ce mode de réalisation, en fonction des capacités du réseau, ou en fonction des capacités de stockage du destinataire, on transmet l'un uniquement des ensembles de sortie générés par le filtre 12.

Le système représenté sur la figure 5 illustre une première utilisation du procédé décrit précédemment, dans le mode de réalisation tel que décrit en référence à la figure 3, dans le cadre d'une application de diffusion. Il comporte un serveur 70' comprenant des moyens de stockage de l'ensemble 10 de données d'entrée. Le filtre 12 est en outre implémenté sur ce serveur 70'.

Le fichier 18 de seuils comporte par exemple trois valeurs seuils et le filtre 12 est configuré pour fournir les trois ensembles de sortie 14'₁, 14'₂ et 14'₃, à partir de ces valeurs seuils.

Le serveur 70' est relié à un réseau de transmission de données 72, tel que le réseau Internet, pour diffuser ces ensembles de sortie à différents destinataires, en utilisant la fonction Multicast du réseau Internet.

Ainsi, par exemple un premier destinataire est un terminal 74 relié au réseau 72 de transmission de données au moyen d'une ligne ADSL à 512 Kbits/s.

Un deuxième destinataire est un terminal 76 relié au réseau 72 de transmission de données au moyen d'une ligne ADSL à 1024 Kbits/s.

Enfin, un troisième destinataire est un terminal 78 relié au réseau 72 de transmission de données au moyen d'une ligne ADSL à 2048 Kbits/s.

Les données de description sont diffusées par le serveur 70' aux terminaux 74, 76 et 78 de la façon suivante, en fonction des capacités de leur raccordement au réseau 72 :
- seul l'ensemble de données 14'₁ est reçu par le terminal 74 ;
- les ensembles de données 14'₁ et 14'₂ sont reçus par le terminal 76 ; et
- les ensembles de données 14'₁, 14'₂ et 14'₃ sont reçus par le terminal 78.

Le système représenté sur la figure 6 illustre une seconde utilisation du procédé décrit précédemment, dans le mode de réalisation tel que décrit en référence à la figure 4. Ce système comporte un serveur 70" relié au réseau 72 de transmission de données. Le filtre 12 est en outre implémenté sur ce serveur 70".

Le fichier 18 de seuils comporte par exemple trois valeurs seuils et le filtre 12 est configuré pour fournir les trois ensembles de sortie 14"₁, 14"₂ et 14"₃, à partir de ces valeurs seuils.

Un premier terminal 80, tel qu'un téléphone mobile GSM, est relié au réseau 72 de transmission de données et est adapté pour émettre une requête r₁ vers le serveur 70". Cette requête contient des informations sur la nature du terminal 80 (téléphone mobile GSM) et donc sur ses capacités à stocker une réponse à cette requête (par exemple, le serveur limitera sa réponse à 2 Ko pour ce terminal).

Un deuxième terminal 82, par exemple un assistant numérique personnel, est relié au réseau 72 de transmission de données et est adapté pour émettre une requête r₂ vers le serveur 70". Cette requête contient des informations sur la nature du terminal 82 (assistant numérique personnel) et donc sur ses capacités à stocker une réponse à cette requête (par exemple, le serveur limitera sa réponse à 3 Ko pour ce terminal).

Enfin, un troisième terminal 84, par exemple un micro-ordinateur, est relié au réseau 72 de transmission de données et est adapté pour émettre une requête r₃ vers le serveur 70". Cette requête contient des informations sur la nature du terminal 84 (micro-ordinateur) et donc sur ses capacités à stocker une réponse à cette requête (par exemple, le serveur limitera sa réponse à 10 Ko pour ce terminal).

En conséquence, les données de description sont transmises par le serveur 70" aux terminaux 80, 82 et 84 de la façon suivante, en fonction des capacités de leur raccordement au réseau 72 :
- seul l'ensemble de données 14"₁ est transmis au terminal 80 ;
- seul l'ensemble de données 14"₂ est transmis au terminal 82 ; et
- seul l'ensemble de données 14"₃ est transmis au terminal 84.

## Revendications

1. procédé de traitement d'ensembles de données de description de contenus multimédia, pour la fourniture d'une pluralité d'ensembles de sortie (14₁, 14₂, ..., 14ₙ) à partir d'un unique ensemble d'entrée étant un de ces ensembles de données de description de contenus multimédia (10), **caractérisé en ce qu'**il comporte les étapes suivantes :
- affecter des coefficients de priorité (16) à au moins une partie des données de description de l'ensemble d'entrée (10) ;
- associer à un nombre prédéterminé d'ensembles de sortie (14₁, 14₂, ..., 14ₙ), des seuils (18) de coefficients de priorité ; et
- répartir les données de description de l'ensemble d'entrée dans les ensembles de sortie (14₁, 14₂, ..., 14ₙ) en fonction des coefficients de priorité (16) qui leur sont affectés et des seuils (18) associés à chacun des ensembles de sortie.

2. Procédé de traitement d'ensembles de données selon la revendication 1, **caractérisé en ce qu'**on affecte un coefficient de priorité spécifique prédéterminé aux données de description devant être contenues dans tous les ensembles de sortie (14₁, 14₂, ..., 14ₙ).

3. Procédé de traitement d'ensembles de données selon la revendication 2, **caractérisé en ce que** chaque donnée de description à laquelle est affectée un coefficient de priorité autre que ledit coefficient de priorité spécifique est contenue dans un unique ensemble de sortie déterminé en fonction des seuils (18) associés aux ensembles de sortie.

4. Procédé de traitement d'ensembles de données selon la revendication 2, **caractérisé en ce que** chaque donnée de description à laquelle est affectée un coefficient de priorité autre que ledit coefficient de priorité spécifique est contenue dans un ou plusieurs ensembles de sortie déterminés en fonction des seuils (18) associés aux ensembles de sortie, de sorte que toutes les données d'un ensemble de sortie quelconque sont contenues dans tout autre ensemble de sortie comportant des données moins prioritaires que celles dudit ensemble de sortie quelconque.

5. Procédé de traitement d'ensembles de données selon l'une quelconque des revendications 1 à 4, **caractérisé en ce qu'**il comporte en outre une étape de transmission d'au moins l'un des ensembles de sortie (14₁, 14₂, ..., 14ₙ) vers un destinataire (74, 76, 78) en fonction des capacités de moyens de transmission des données de description vers le destinataire.

6. Procédé de traitement d'ensembles de données selon l'une quelconque des revendications 1 à 5, **caractérisé en ce qu'**il comporte en outre une étape de transmission d'au moins l'un des ensembles de sortie (14₁, 14₂, ..., 14ₙ) vers un destinataire (80, 82, 84) en fonction des capacités de moyens de stockage du destinataire.

7. Procédé de traitement d'ensembles de données selon l'une quelconque des revendications 1 à 5, **caractérisé en ce qu'**il comporte en outre une étape de transmission d'au moins l'un des ensembles de sortie (14₁, 14₂, ..., 14ₙ) vers un destinataire (80, 82, 84) en fonction d'un niveau de souscription de l'usager à un service prédéterminé.

8. Procédé de traitement d'ensembles de données selon l'une quelconque des revendications 1 à 5, **caractérisé en ce qu'**il comporte en outre une étape de transmission d'au moins l'un des ensembles de sortie (14₁, 14₂, ..., 14ₙ) vers un destinataire (80, 82, 84) en fonction d'un paiement effectué préalablement pour l'accès à cet ensemble de sortie (14₁, 14₂, ..., 14ₙ).

9. Utilisation d'un procédé de traitement d'ensembles de données selon l'une quelconque des revendications 1 à 8 pour le traitement d'un fichier de données XML (10).

10. Programme d'ordinateur (12) adapté pour le traitement d'ensembles de données de description de contenus multimédia, pour la fourniture d'une pluralité d'ensembles de sortie (14₁, 14₂, ..., 14ₙ) à partir d'un unique ensemble d'entrée étant un de ces ensembles de données de description de contenus multimédia (10), **caractérisé en ce qu'**il comporte :
- des moyens (30) de lecture d'un ensemble de coefficients de priorité (16) affectés à au moins une partie des données de description de l'ensemble d'entrée (10) ;
- des moyens (30) de lecture d'un ensemble de seuils (18) de coefficients de priorité associés à un nombre prédéterminé d'ensembles de sortie (14₁, 14₂, ..., 14ₙ), ; et
- des moyens (34, 36) de répartition des données dans les ensembles de sortie (14₁, 14₂, ..., 14ₙ) en fonction des coefficients de priorité (16) de description de l'ensemble d'entrée affectés et des seuils (18) associés à chacun des ensembles de sortie.

## Claims

1. Method of processing multimedia content description data sets, for the provision of a plurality of output sets (14₁, 14₂, ..., 14ₙ) from a single input set (10) being one of these multimedia content description data sets, **characterized in that** it comprises the following steps:
- assigning priority coefficients (16) to at least a part of the description data of the input set (10);
- associating thresholds (18) of priority coefficients with a predetermined number of output sets (14₁, 14₂, ..., 14ₙ); and
- distributing the description data of the input set in the output sets (14₁, 14₂, ..., 14ₙ) as a function of the priority coefficients (16) assigned to them and the thresholds (18) associated with each of the output sets.

2. Method of processing data sets according to Claim 1, **characterized in that** a predetermined specific priority coefficient is assigned to the description data having to be contained in all the output sets (14₁, 14₂, ..., 14ₙ).

3. Method of processing data sets according to Claim 2, **characterized in that** each description data item to which a priority coefficient other than the said specific priority coefficient is assigned is contained in a single output set determined as a function of the thresholds (18) associated with the output sets.

4. Method of processing data sets according to Claim 2, **characterized in that** each description data item to which a priority coefficient other than the said specific priority coefficient is assigned is contained in one or more output sets determined as a function of the thresholds (18) associated with the output sets, so that all the data of any output set whatsoever are contained in every other output set comprising data of lower priority than those of the said any output set whatsoever.

5. Method of processing data sets according to any one of Claims 1 to 4, **characterized in that** it furthermore comprises a step of transmitting at least one of the output sets (14₁, 14₂, ..., 14ₙ) to a recipient (74, 76, 78) as a function of the capacities of means of transmission of the description data to the recipient.

6. Method of processing data sets according to any one of Claims 1 to 5, **characterized in that** it furthermore comprises a step of transmitting at least one of the output sets (14₁, 14₂, ..., 14ₙ) to a recipient (80, 82, 84) as a function of the capacities of means of storage of the recipient.

7. Method of processing data sets according to any one of Claims 1 to 5, **characterized in that** it furthermore comprises a step of transmitting at least one of the output sets (14₁, 14₂, ..., 14ₙ) to a recipient (80, 82, 84) as a function of a level of subscription of the user to a predetermined service.

8. Method of processing data sets according to any one of Claims 1 to 5, **characterized in that** it furthermore comprises a step of transmitting at least one of the output sets (14₁, 14₂, ..., 14ₙ) to a recipient (80, 82, 84) as a function of a payment made previously for access to this output set (14₁, 14₂, ..., 14ₙ).

9. Use of a method of processing data sets according to any one of Claims 1 to 8 for the processing of an XML data file (10).

10. Computer program (12) adapted for the processing of multimedia content description data sets, for the provision of a plurality of output sets (14₁, 14₂, ..., 14ₙ) from a single input set (10) being one of these multimedia content description data sets, **characterized in that** it comprises:
- means (30) of reading a set of priority coefficients (16) assigned to at least a part of the description data of the input set (10);
- means (30) of reading a set of thresholds (18) of priority coefficients assigned to a predetermined number of output sets (14₁, 14₂, ..., 14ₙ) ;
- means (34, 36) of distributing the data in the output sets (14₁, 14₂, ..., 14ₙ) as a function of the priority coefficients (16) assigned to them and of the thresholds (18) associated with each of the output sets.

## Patentansprüche

1. Verfahren zur Verarbeitung von Gruppen von Beschreibungsdaten von Multimedia-Inhalten, zur Lieferung mehrerer Ausgangsgruppen (14₁, 14₂, ..., 14ₙ) ausgehend von einer einzigen Eingangsgruppe (10), die einer dieser Gruppen von Beschreibungsdaten von Multimedia-Inhalten ist, **dadurch gekennzeichnet, dass** es die folgenden Schritte aufweist:
- Zuteilung von Prioriätskoeffizienten (16) zu mindestens einem Teil der Beschreibungsdaten der Eingangsgruppe (10);
- Zuordnen von Schwellwerten (18) von Prioritätskoeffizienten zu einer vorbestimmten Anzahl von Ausgangsgruppen (14₁, 14₂, ..., 14ₙ) ; und
- Verteilung der Beschreibungsdaten der Eingangsgruppe in den Ausgangsgruppen (14₁, 14₂, ..., 14ₙ) in Abhängigkeit von den ihnen zugeteilten Prioritätskoeffizienten (16) und den jeder der Ausgangsgruppen zugeordneten Schwellwerten (18).

2. Verfahren zur Verarbeitung von Datengruppen nach Anspruch 1, **dadurch gekennzeichnet, dass** ein vorbestimmter spezifischer Prioritätskoeffizient den Beschreibungsdaten zugeteilt wird, die in allen Ausgangsgruppen (14₁, 14₂, ..., 14ₙ) vorhanden sein müssen.

3. Verfahren zur Verarbeitung von Datengruppen nach Anspruch 2, **dadurch gekennzeichnet, dass** jeder Beschreibungsdatenwert, dem ein anderer Prioritätskoeffizient zugeteilt ist als der spezifische Prioritätskoeffizient, in einer einzigen Ausgangsgruppe enthalten ist, die in Abhängigkeit von den den Ausgangsgruppen zugeordneten Schwellwerten (18) bestimmt wird.

4. Verfahren zur Verarbeitung von Datengruppen nach Anspruch 2, **dadurch gekennzeichnet, dass** jeder Beschreibungsdatenwert, dem ein anderer Prioritätskoeffizient zugeteilt ist als der spezifische Prioritätskoeffizient, in einer oder mehreren Ausgangsgruppen enthalten ist, die in Abhängigkeit von den den Ausgangsgruppen zugeordneten Schwellwerten (18) bestimmt werden, so dass alle Daten einer beliebigen Ausgangsgruppe in jeder anderen Ausgangsgruppe enthalten sind, die weniger prioritäre Daten enthält als diejenigen der beliebigen Ausgangsgruppe.

5. Verfahren zur Verarbeitung von Datengruppen nach einem der Ansprüche 1 bis 4, **dadurch gekennzeichnet, dass** es außerdem einen Schritt der Übertragung mindestens einer der Ausgangsgruppen (14₁, 14₂, ..., 14ₙ) zu einem Empfänger (74, 76, 78) in Abhängigkeit von den Kapazitäten von Mitteln zur Übertragung der Beschreibungsdaten zum Empfänger aufweist.

6. Verfahren zur Verarbeitung von Datengruppen nach einem der Ansprüche 1 bis 5, **dadurch gekennzeichnet, dass** es außerdem einen Schritt der Übertragung mindestens eines der Ausgangsgruppen (14₁, 14₂, ..., 14ₙ) zu einem Empfänger (80, 82, 84) in Abhängigkeit von den Kapazitäten von Speichermitteln des Empfängers aufweist.

7. Verfahren zur Verarbeitung von Datengruppen nach einem der Ansprüche 1 bis 5, **dadurch gekennzeichnet, dass** es außerdem einen Schritt der Übertragung mindestens einer der Ausgangsgruppen (14₁, 14₂, ..., 14ₙ) zu einem Empfänger (80, 82, 84) in Abhängigkeit von einer Abonnementebene des Benutzers bei einem vorbestimmten Dienst aufweist.

8. Verfahren zur Verarbeitung von Datengruppen nach einem der Ansprüche 1 bis 5, **dadurch gekennzeichnet, dass** es außerdem einen Schritt der Übertragung mindestens einer der Ausgangsgruppen (14₁, 14₂, ..., 14ₙ) zu einem Empfänger (80, 82, 84) in Abhängigkeit von einer Zahlung aufweist, die vorher für den Zugriff auf diese Ausgangsgruppe (14₁, 14₂, ..., 14ₙ) geleistet wurde.

9. Verwendung eines Verfahrens zur Verarbeitung von Datengruppen nach einem der Ansprüche 1 bis 8 zur Verarbeitung einer XML-Datei (10).

10. Computerprogramm (12), das zur Verarbeitung von Gruppen von Beschreibungsdaten von Multimedia-Inhalten, zur Lieferung mehrerer Ausgangsgruppen (14₁, 14₂, ..., 14ₙ) ausgehend von einer einzigen Eingangsgruppe (10), die eine dieser Gruppen von Beschreibungsdaten von Multimedia-Inhalten ist, ausgelegt ist, **dadurch gekennzeichnet, dass** es aufweist:
- Mittel (30) zum Lesen einer Gruppe von Prioritätskoeffizienten (16), die mindestens einem Teil der Beschreibungsdaten der Eingangsgruppe (10) zugeteilt sind;
- Mittel (30) zum Lesen einer Gruppe von Schwellwerten (18) von Prioritätskoeffizienten, die einer vorbestimmten Anzahl von Ausgangsgruppen (14₁, 14₂, ..., 14ₙ) zugeordnet sind; und
- Mittel (34, 36) zur Verteilung der Daten in den Ausgangsgruppen (14₁, 14₂, ..., 14ₙ) in Abhängigkeit von den ihnen zugeteilten Prioritätskoeffizienten (16) und von den jeder der Ausgangsgruppen zugeordneten Schwellwerten (18).
